# FASCICULE DE BREVET EUROPEEN

(11) **EP 2 313 588 B1**
(45) Date de publication et mention de la délivrance du brevet: **18.06.2014**
(21) Numéro de dépôt: 09802565.3
(22) Date de dépôt: 10.06.2009
(51) Int. Cl.: E05F 15/00, G01L 25/00, G01M 99/00

(54) **BANC DE CARACTERISATION D'ECRASEMENT D'UN CAPTEUR DE PINCEMENT POUR OUVRANT MOTORISE, NOTAMMENT D'UN VEHICULE AUTOMOBILE**
WERKBANK ZUR CHARAKTERISIERUNG DER QUETSCHUNG EINES EINKLEMMSENSORS FÜR EIN MOTORISIERTES TÜRBLATT, IM BESONDEREN EINES FAHRZEUGES
BENCH FOR CHARACTERISING THE CRUSH OF A PINCHING SENSOR FOR A POWERED DOOR LEAF, PARTICULARLY OF AN AUTOMOBILE

(30) Priorité: 31.07.2008 FR 0804371
(43) Date de publication de la demande: 27.04.2011
(73) Titulaire: Sealynx Automotive Transières, 92000 Nanterre (FR)
(72) Inventeur: MALNOË, Michel, F-14670 Saint Samson (FR); PERRIN, Thierry, F-76160 Saint Jacques Sur Darnetal (FR)
(74) Mandataire: Radault, Gabrielle
(86) Numéro de dépôt international: PCT/FR2009/051090
(87) Numéro de publication internationale: WO 2010/012918

(56) Documents cités:
- GB-A- 2 023 811

## Description

La présente invention concerne un banc de caractérisation d'écrasement d'un capteur de pincement pour ouvrant motorisé, notamment d'un véhicule automobile.

Les dispositifs d'ouvrant motorisés sont de plus en plus employés tant dans l'immobilier que pour l'automobile. Ces ouvrants peuvent être de type à l'américaine (l'ouvrant coulisse parallèlement à lui-même), à la française ou à l'italienne (l'ouvrant est articulé autour d'un axe) ou de tout autre type. Dans le domaine automobile on connaît les glaces de fenêtre, les panneaux de toit ouvrant et depuis peu les portières ou les hayons motorisés. Le problème qui apparaît avec la motorisation est le risque de pincement pouvant subvenir lors de la fermeture de l'ouvrant, notamment d'un membre (doigt, bras, cou, etc) qu'il convient impérativement de détecter au plus tôt afin de stopper et/ou d'inverser la motorisation.

La demanderesse fabrique un joint capteur de pincement en caoutchouc cellulaire pour ouvrant motorisé innovant et compact décrit dans la demande de brevet PCT / FR 2008 / 000854. Le principe de ce joint capteur est qu'il comprend un moyen tubulaire déformable dans lequel est propagée une onde de pression dynamique de basse fréquence, et qu'un contact d'un obstacle avec le joint capteur déforme localement le moyen tubulaire, ce qui a pour effet de modifier l'onde de pression dynamique. La détection de cette modification permet de détecter un écrasement. De plus lors du contact entre un obstacle et le joint capteur, le choc d'accostage produit une onde sonore, elle aussi détectable.

Afin de vérifier le bon fonctionnement et les caractéristiques, notamment temporelles d'un tel joint capteur ou autre capteur de pincement, il convient de disposer d'un banc de caractérisation.

L'invention a pour objet un banc de caractérisation d'écrasement d'un capteur de pincement pour ouvrant motorisé notamment d'un véhicule automobile, équipé d'un module de détection d'un choc/écrasement du capteur apte à produire un signal logique lorsque le capteur subit un choc/écrasement, comprenant un cadre d'accueil à la périphérie duquel est disposé le capteur de pincement à caractériser, selon une forme indicative de l'utilisation finale, et un impacteur, mobiles relativement l'un par rapport à l'autre, afin que l'impacteur puisse venir en contact avec ledit capteur selon un mouvement indicatif du mouvement de fermeture dudit ouvrant motorisé, une motorisation assurant ce mouvement, un moyen de commande de la motorisation, un moyen d'acquisition d'image, cadré sur la zone de contact entre l'impacteur et le capteur, apte à observer l'écrasement dudit capteur, un moyen d'analyse d'image apte à traiter les images acquises pour mesurer la course d'écrasement du capteur, un module de traitement interfaçant le moyen d'analyse d'image et le module de détection d'un choc/ écrasement afin de corréler temporellement le signal logique de détection d'un choc/écrasement du capteur avec la course d'écrasement du capteur.

Selon une autre caractéristique de l'invention, le module de traitement interface le moyen de commande de la motorisation de l'ouvrant afin de commander la motorisation de l'ouvrant.

Selon une autre caractéristique de l'invention, le banc de caractérisation comprend encore un moyen de mesure d'effort disposé de manière à mesurer l'effort d'écrasement du capteur, le module de traitement interfaçant ledit moyen de mesure d'effort afin de corréler l'effort d'écrasement avec la course d'écrasement du capteur.

Selon une autre caractéristique de l'invention, la courbe de l'effort d'écrasement en fonction de la course d'écrasement est tabulée.

Selon une autre caractéristique de l'invention, le banc de caractérisation comprend encore un module de sécurité apte à stopper/inverser la commande de motorisation, et ledit module de sécurité est interfacé avec le module de détection d'un choc/écrasement et avec le moyen de commande de la motorisation, afin de stopper/inverser la motorisation sur réception du signal logique de détection d'un choc/écrasement du capteur.

Selon une autre caractéristique de l'invention, le module de traitement est apte à déterminer la course d'écrasement et l'effort d'écrasement à l'instant de réception du signal logique de détection d'un choc/écrasement du capteur.

Selon une autre caractéristique de l'invention, le banc de caractérisation comprend encore un moyen de détection associé à la motorisation, apte à déterminer l'arrêt/l'inversion de la motorisation.

Selon une autre caractéristique de l'invention, le module de traitement est apte à déterminer la course d'écrasement et l'effort d'écrasement à l'instant de l'arrêt/l'inversion de la motorisation.

Selon une autre caractéristique de l'invention, le banc de caractérisation comprend encore un moyen de calcul de maximum, apte à déterminer la course d'écrasement maximale, ou l'effort d'écrasement maximum.

Selon une autre caractéristique de l'invention, le banc de caractérisation comprend encore un moyen de mesure du temps afin de pouvoir dater : l'instant d'accostage de l'impacteur avec le capteur, l'instant d'émission par le module de détection du signal logique de détection d'un choc/écrasement, l'instant d'émission par le module de sécurité d'une commande d'arrêt/inversion de la commande de motorisation, l'instant d'arrêt/inversion effectif de la motorisation tel que détecté par le moyen de détection associé à la motorisation, l'instant où se produit le maximum de l'écrasement, et/ou l'instant où se produit le maximum de l'effort.

Selon une autre caractéristique de l'invention, le moyen d'acquisition d'image est soit fixe par rapport au capteur, soit fixe par rapport à l'impacteur.

Selon une autre caractéristique de l'invention, le moyen d'acquisition d'image est une caméra à cadence au moins égale à 1000 images/s pour une vitesse de mouvement de l'ouvrant de 0,1m/s.

Selon une autre caractéristique de l'invention, le moyen d'acquisition d'image comprend encore un moyen d'éclairage spécifique de la zone de contact et un fond de contraste disposé en arrière plan de la zone de contact.

Selon une autre caractéristique de l'invention, le moyen d'acquisition d'image est apte à mesurer une course d'écrasement avec une résolution de 5 centièmes, soit un champ de 100 pixels pour 5 mm.

D'autres caractéristiques, détails et avantages de l'invention ressortiront plus clairement de la description détaillée donnée ci-après à titre indicatif en relation avec des dessins sur lesquels :
- la figure 1 présente un capteur en situation de pincement,
- la figure 2 présente un schéma de principe du banc de caractérisation selon l'invention,
- la figure 3 présents différents profils d'impacteur, en vue de face et de côté,
- la figure 4 illustre un détail du moyen d'acquisition d'image,en vue de face et de côté,
- les figures 5-8 présentent différentes configurations du banc de caractérisation,
- les figures 9 et 10 illustrent une séquence de caractérisation.

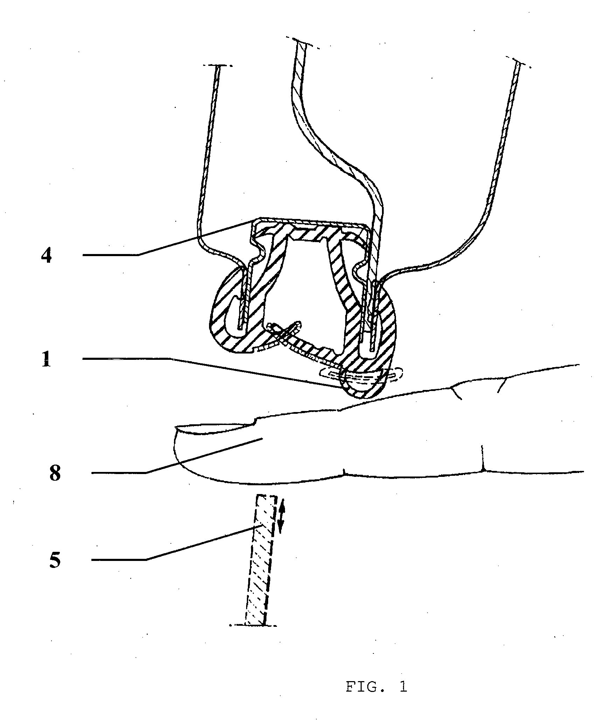

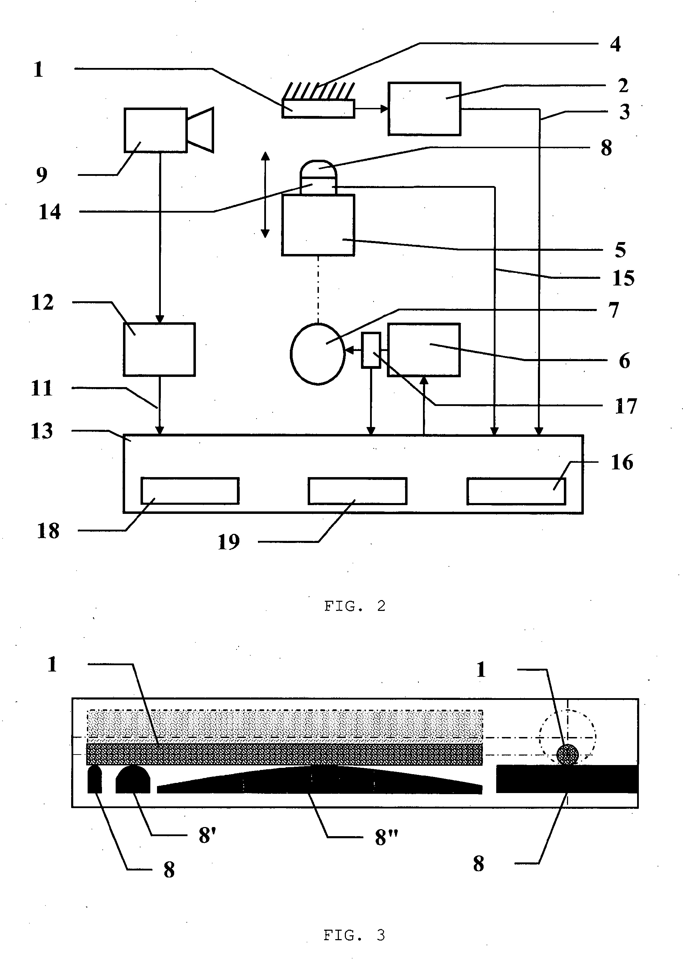

Sur la figure 1 est représenté un exemple d'utilisation d'un joint 1 formant capteur anti-pincement en configuration d'utilisation finale. Le joint 1 capteur est ici utilisé dans un montage de vitre motorisée d'automobile. Le joint 1 capteur, qui est ici avantageusement monobloc avec un joint d'étanchéité, est disposé à la périphérie d'un dormant formant un cadre d'accueil 4. L'ouvrant 5 est ici la vitre qui se déplace, sensiblement dans son plan, pour venir en position fermée se loger dans le dormant, au niveau du joint 1. Le joint 1 capteur comporte en particulier une zone en forme de boudin creux. Lorsqu'un obstacle 8, ici figuré par un doigt 8 humain s'intercale dans l'ouverture entre le dormant et l'ouvrant 5, durant une phase de fermeture de l'ouvrant 5, il risque de se faire pincer entre eux deux. Ce faisant, l'obstacle 8 vient nécessairement en contact avec le joint 1 et particulièrement avec sa partie active, le boudin creux. Le choc contre le joint 1 capteur, ou son écrasement par le doigt 8, est détecté par un module de détection 2 (figure 2) connecté au joint 1 capteur. Cette détection produit un signal logique 3 qui est avantageusement utilisé pour commander un arrêt de la motorisation 7. Le risque d'un pincement, pouvant entraîner des blessures, est ainsi évité. Avantageusement l'arrêt de la motorisation 7 peut être complété par une mobilisation dans le sens inverse, ou inversion, afin de stopper le pincement et de libérer l'obstacle 8 pincé.

Le but d'un banc de caractérisation d'un tel joint 1 capteur, tel que schématisé à la figure 2, est de reproduire cette séquence, amenant un obstacle, simulé par un impacteur 8, à venir en contact avec un joint 1 capteur, afin de tester le bon fonctionnement du joint 1 capteur et de son module de détection 2, dans des conditions de fonctionnement réalistes notamment sur le véhicule (dans son environnement réel), et de mesurer des grandeurs caractéristiques telles que course d'écrasement 11, effort d'écrasement 15, temps de réaction de détection du joint 1 capteur et de son module de détection 2, temps de réaction de commande d'arrêt de la motorisation 7, temps jusqu'à l'arrêt effectif de la motorisation 7.

Pour cela un banc de caractérisation d'écrasement d'un joint 1 capteur de pincement pour ouvrant motorisé selon l'invention accueille un joint 1 capteur de pincement à caractériser. Ce joint 1 capteur est équipé d'un module de détection 2 d'un choc/écrasement du joint 1 capteur. Ce module de détection 2 assure la production d'une onde vibratoire de pression émise dans le boudin creux et mesure les signaux de pression en réception. Ce module de détection 2 est apte à produire un signal logique 3 lorsque le joint 1 capteur subit un choc et/ou un écrasement. Compte tenu du principe de fonctionnement du joint 1 capteur, le test de son bon fonctionnement nécessite une mise en oeuvre indicative de sa conformation finale. Pour cela le banc de caractérisation comprend un cadre 4 d'accueil du joint 1 capteur, avantageusement indicatif, en terme de forme imposée au joint 1, du dormant ou de l'ouvrant réels sur lequel le joint 1 capteur est destiné à être monté en utilisation finale. Le joint 1 capteur, en utilisation finale ou réelle, est disposé sur la périphérie du dormant, ou respectivement sur la périphérie de l'ouvrant. Le cadre d'accueil 4 reproduit alors avantageusement au moins la périphérie dudit dormant, ou respectivement dudit ouvrant.

L'obstacle 8 destiné à venir écraser le joint 1 capteur est simulé par au moins un impacteur 8 interchangeable, de forme indicative d'un obstacle craint. La figure 3 illustre, selon une vue de face et une vue de profil, trois impacteurs 8, 8', 8", "normalisés" présentant trois courbures indicatives respectivement d'un doigt d'enfant 8 (4mm), d'un doigt d'adulte 8' (10mm), d'un cou d'enfant 8" (200mm). La vue de profil illustre que la profondeur d'un tel impacteur 8, 8', 8" est largement supérieure à celle du joint 1 capteur, soit par exemple 40mm pour un joint de 6 à 16 mm.

Cet impacteur 8, ou respectivement le joint 1 capteur, est mobilisé pour venir en contact avec ledit joint 1 capteur, respectivement l'impacteur 8, selon un mouvement relatif indicatif du mouvement de fermeture dudit ouvrant. Ceci est réalisé par une motorisation 7, accompagnée d'un moyen de commande 6 de motorisation, et une cinématique relative du joint 1 capteur et de l'impacteur 8, reproduisant un mouvement similaire, dans sa trajectoire et sa vitesse, à celui de l'ouvrant relativement au dormant, en configuration finale.

Ceci peut avantageusement être réalisé en utilisant un ouvrant motorisé final et sa motorisation, en fixant l'impacteur 8 sur l'ouvrant si le joint 1 capteur est disposé à la périphérie du dormant, ou en fixant l'impacteur 8 sur le dormant, ou un autre élément fixe tel le sol, si le joint 1 capteur est disposé à la périphérie de l'ouvrant.

Dans tous les cas, la motorisation 7 et son moyen de commande 6 doivent être indicatifs de la motorisation et de son moyen de commande finaux utilisés pour l'ouvrant motorisé en configuration finale. Ceci est indispensable pour pouvoir obtenir des caractéristiques de temps de réponse représentatives.

Le but ultime du banc de caractérisation est de connaître l'effort maximum de pincement, potentiellement vulnérant, subi par un membre pincé et la durée de ce pincement.

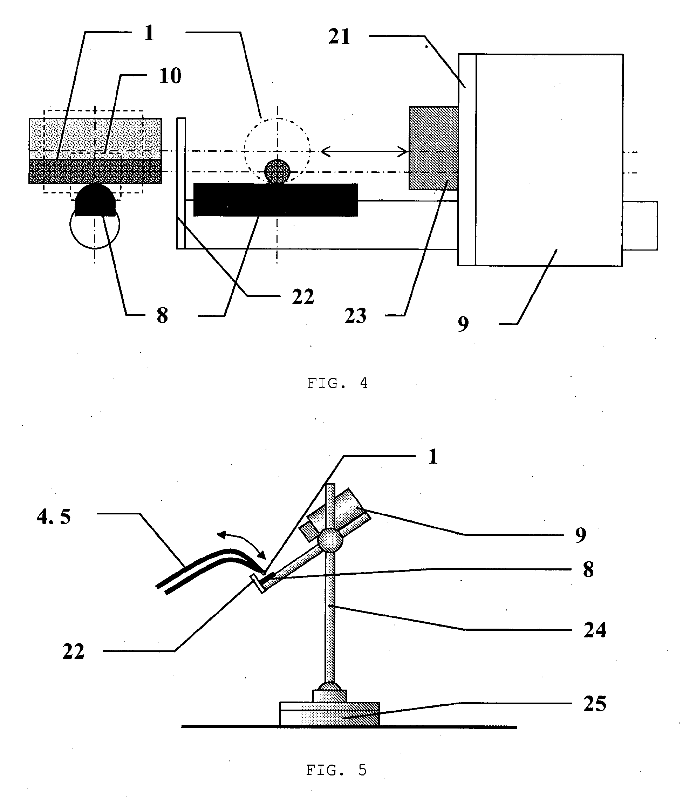

Le banc de caractérisation comprend un moyen d'acquisition 9 d'image, avantageusement cadré sur la zone de contact 10 (figure 4) entre l'impacteur 8 et le joint 1 capteur, afin d'observer l'écrasement 11 dudit joint 1 capteur, un moyen d'analyse 12 d'image apte à traiter les images acquises par le moyen d'acquisition 9 d'image, pour mesurer la course d'écrasement 11 du joint 1 capteur, un module de traitement 13 interfaçant le moyen d'analyse 12 d'image et le module de détection 2 d'un choc/écrasement afin de corréler temporellement le signal logique 3 de détection d'un choc/écrasement du joint 1 capteur avec la course d'écrasement 11 du joint 1 capteur.

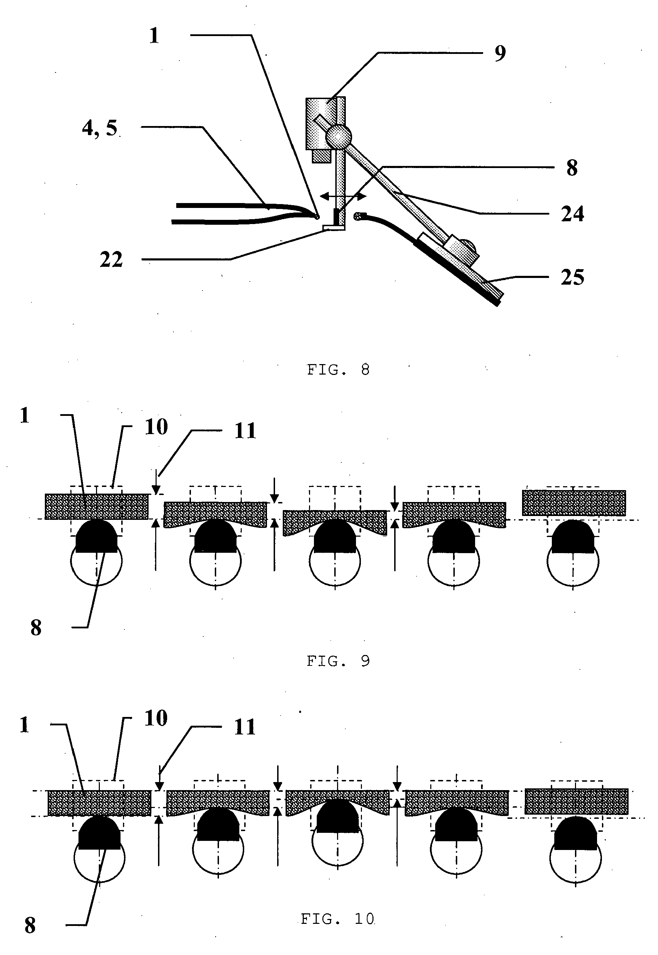

Ladite zone de contact 10 ou champ 10 du moyen d'acquisition 9, comme illustré à la figure 4, est tel que soit bien vu le profil de l'impacteur 8 et la partie du joint 1 capteur subissant un écrasement. Les figures 9 et 10 illustrent un exemple de séquence d'images ainsi acquises.

Ceci permet ainsi de déterminer la course d'écrasement 11 du joint 1 capteur en fonction du temps et particulièrement aux instants particuliers que sont : l'instant d'émission du signal logique 3 de détection, ou encore l'instant ou une commande d'arrêt/inversion est envoyée à la motorisation 7, ou l'instant ou la motorisation 7 s'arrête effectivement.

Les figures 5-8 illustrent des exemples de configuration. La figure 5 présente un ouvrant motorisé de type hayon. L'ouvrant 5 fait office de cadre 4 d'accueil du joint 1 capteur. L'impacteur 8 est disposé sur un support 24 fixe par rapport au sol au moyen d'un pied 25. Le support 24 porte aussi le moyen 9 d'acquisition.

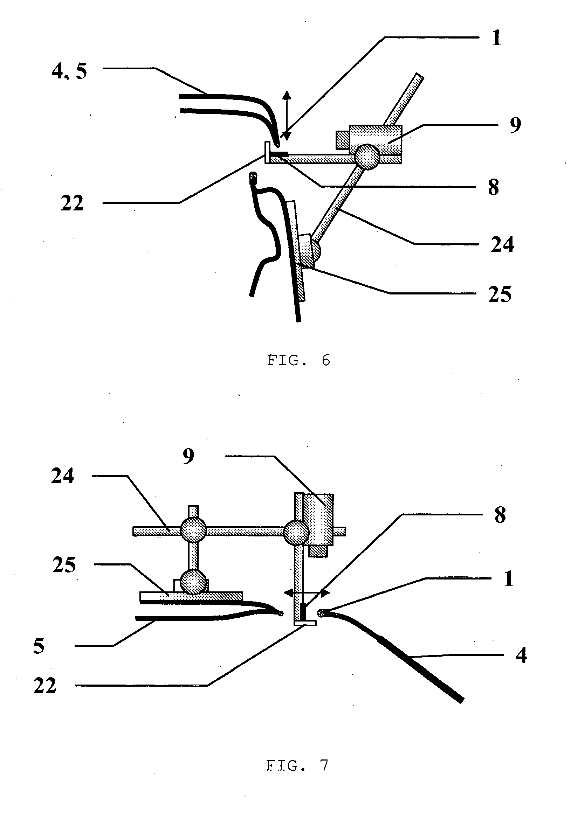

La figure 6 présente une variante de la configuration précédente avec toujours un ouvrant motorisé de type hayon, où le support 24 de l'impacteur 8 et du moyen d'acquisition 9 est fixe par rapport au dormant. Ceci est réalisé par exemple au moyen d'un pied 25 à ventouse à vide ou magnétique.

Dans les deux configurations précédentes, la motorisation finale de l'ouvrant 5 peut être avantageusement employée pour réaliser le mouvement relatif du joint 1 capteur et de l'impacteur 8. Naturellement, elle peut être celle du véhicule, de même que sa commande.

Dans ces deux configurations, l'impacteur 8 est immobile et le joint 1 se déplace.

La figure 7 présente un ouvrant motorisé de type toit ouvrant. Le dormant fait office de cadre 4 d'accueil du joint 1 capteur. L'impacteur 8 est disposé sur un support 24 fixe par rapport à l'ouvrant 5 au moyen d'un pied 25. Le support 24 porte aussi le moyen 9 d'acquisition. La motorisation finale de l'ouvrant 5 peut être avantageusement employée pour réaliser le mouvement relatif du joint 1 capteur et de l'impacteur 8. Dans cette configuration, le joint 1 est immobile et l'impacteur 8 se déplace.

La figure 8 présente une variante de la configuration précédente avec toujours un ouvrant motorisé de type toit ouvrant, où l'ouvrant 5 fait office de cadre d'accueil 4 du joint 1 capteur et où le support 24 de l'impacteur 8 et du moyen d'acquisition 9 est fixe par rapport au dormant. Dans cette configuration, le joint 1 se déplace et l'impacteur 8 et le moyen d'acquisition 9 sont fixes.

Dans les quatre configurations précédentes des figures 5-8, le moyen d'acquisition 9 est solidaire de l'impacteur 8. L'impacteur 8 est donc vu comme immobile par le moyen d'acquisition 9. Le joint 1 capteur entre dans le champ 10 avant de venir en contact avec l'impacteur 8. Ceci produit une séquence d'images du type de celle de la figure 9. Alternativement, il est possible de disposer le moyen d'acquisition 9 fixe par rapport au joint 1 capteur. Dans ce cas le joint 1 capteur est vu comme immobile et l'impacteur 8 entre dans le champ 10 avant de venir en contact avec le joint 1 capteur et l'on obtient une séquence d'images du type de celle de la figure 10.

Avantageusement le module de traitement 13 interface le moyen de commande 6 de 1a motorisation 7 afin de commander la motorisation 7 et le mouvement relatif du joint 1 et de l'impacteur 8. Ceci peut permettre de déclencher le début de l'essai en commandant le mouvement de rapprochement de l'impacteur 8 et du joint 1 et ensuite de commander le dégagement.

Dans le cas d'une caractérisation complète, un essai réalise avantageusement une séquence complète, à savoir : un rapprochement relatif du joint 1 et de l'impacteur 8, jusqu'à produire une détection de choc/écrasement du joint 1 par le module de détection 2 et la production d'un signal logique 3, ce signal 3 pilotant un arrêt/inversion de la motorisation 7, inversion qui entraîne un dégagement du joint 1 et de l'impacteur 8, jusqu'à revenir à une position relative sensiblement identique à la position initiale. Ceci correspond aux séquences d'images des figures 9 et 10.

Le moyen d'acquisition 9 mesure la course d'écrasement 11 en fonction du temps. Afin de mesurer l'effort 15 d'écrasement en fonction de la course d'écrasement 11 et/ou en fonction du temps, le banc de caractérisation comprend encore un moyen de mesure 14 d'effort disposé de manière à mesurer l'effort d'écrasement 15 du joint 1 capteur. Le module de traitement 13 interface ce moyen de mesure 14 d'effort afin de corréler l'effort d'écrasement 15 avec la course d'écrasement 11 du joint 1 capteur. Pour cela un capteur d'effort 14, par exemple un dynamomètre, est disposé, en série en un point quelconque de la chaîne : cadre d'accueil 4, joint 1 capteur, impacteur 8, ouvrant ou dormant et motorisation 7. La figure 2 illustre un tel capteur d'effort 14 intercalé entre ouvrant 5 et impacteur 8.

Ce moyen 14 permet ainsi de corréler l'effort d'écrasement 15 avec la course d'écrasement 11 ou le temps. Ceci peut soit être corrélé en direct, soit avantageusement un premier essai est réalisé pour déterminer une courbe de l'effort d'écrasement 15 en fonction de la course d'écrasement 11 qui est tabulée. Ensuite lors d'un essai de caractérisation, seule la course d'écrasement 11 est déterminée, l'effort 15 étant déterminé au moyen de la table.

La banc de caractérisation comprend encore un module de sécurité 16 apte à stopper/inverser la commande de motorisation 7. Ledit module de sécurité 16 est interfacé avec le module de détection 2 d'un choc/écrasement et avec le moyen de commande 6 de la motorisation 7, afin de stopper/inverser la motorisation 7, sur réception du signal logique 3 de détection d'un choc/écrasement du joint 1 capteur. Un tel module de sécurité 16, existant dans la chaîne de commande finale, pourra avantageusement être réutilisé pour le banc, afin que les mesures soient indicatives. Ceci permet avantageusement de tester le joint sur une caractérisation complète.

Le moyen d'acquisition 9 permet de mesurer la course d'écrasement 11. L'effort d'écrasement 15 est déterminé grâce au moyen de mesure 14 ou à une valeur tabulée. Le module de traitement 13 est apte à déterminer et à mémoriser la course d'écrasement 11 et l'effort d'écrasement 15 à l'instant de réception du signal logique 3 de détection d'un choc/écrasement du joint 1 capteur.

L'instant de réception du signal logique 3 est important pour caractériser le joint 1. Cependant il ne tient compte que du temps de réaction du joint 1 et de son module de détection 2. Une autre information caractérisante importante est l'instant d'arrêt effectif et le cas échéant de début d'inversion de la motorisation 7, qui va réellement supprimer le risque de blessure. Pour cela le banc de caractérisation comprend un moyen de détection 17 associé à la motorisation 7, apte à déterminer l'arrêt/l'inversion effectif de la motorisation 7. Un tel moyen de détection 17 peut être par exemple un capteur mesurant le courant de commande de la motorisation 7 entre la commande 6 et la motorisation 7 et apte à déterminer une suppression/inversion dudit courant. Ce moyen de détection 17 est interfacé avec le module de traitement 13.

Le module de traitement 13 est apte à déterminer et à mémoriser la course d'écrasement 11 et l'effort d'écrasement 15 à l'instant de l'arrêt/inversion de la motorisation 7 ainsi déterminé.

De manière optionnelle, il est intéressant pour compléter la caractérisation de déterminer la course d'écrasement 11 maximale, et/ou l'effort d'écrasement 15 maximum au cours d'un essai. Pour cela le banc de caractérisation comprend encore un moyen de calcul 18 de maximum, apte à déterminer la course 11 d'écrasement maximale, ou l'effort 15 d'écrasement maximum. Un tel moyen est initialisé au début d'un essai et mémorise ladite valeur maximale.

Afin de dater, de corréler temporellement, ou encore de déterminer des courbes de valeur en fonction du temps, le banc de caractérisation comprend avantageusement un moyen de mesure 19 du temps. Le banc de caractérisation est ainsi capable au moins de dater les événements suivants : l'instant d'accostage de l'impacteur 8 avec le joint 1 capteur ou instant où l'impacteur arrive en contact avec le joint 1 capteur, l'instant d'émission par le module de détection 2 du signal logique 3 de détection d'un choc/écrasement, l'instant d'émission par le module de sécurité 16 d'une commande d'arrêt/inversion 20 de la commande 6 de motorisation 7, l'instant d'arrêt/inversion effectif de la motorisation 7 de l'ouvrant 5 tel que détecté par le moyen de détection 17 associé à la motorisation 7, l'instant où se produit le maximum de l'écrasement, et/ ou l'instant où se produit le maximum de l'effort.

L'instant d'accostage est avantageusement pris comme origine des temps. En effet la mesure importante est la durée entre l'accostage et respectivement la détection, la commande d'arrêt/inversion de la motorisation, l'arrêt effectif de la motorisation et/ou le dégagement.

Le principe et l'avantage du joint 1 que l'on souhaite caractériser est qu'il peut détecter un contact avec un obstacle 8 moyennant un écrasement 11 très faible. Il convient donc de disposer d'un moyen d'acquisition 9 adapté à la mesure d'un tel écrasement 11. Pour cela le moyen d'acquisition 9 d'image est une caméra à cadence au moins égale à 1000 images/s pour une vitesse de mouvement du joint 1 relativement à l'impacteur 8 de 0,1m/s. En cas d'augmentation de la vitesse, il convient d'augmenter la cadence image proportionnellement.

Compte tenu des dimensions du joint 1 capteur comprises entre 6 et 16mm, des dimensions des impacteurs 8, 8', 8", comprises entre 4 et 200mm, et des temps de réponses des différents moyens et modules, une précision du 1/10^{ème} de mm est souhaitable pour la mesure de la course d'écrasement 11. Le moyen d'acquisition 9 d'image est tel qu'il puisse mesurer une course d'écrasement 11 avec une résolution de 5/100^{ème}, soit un champ de 100 pixels pour 5mm.

Afin de faciliter le traitement d'image en produisant une image contrastée, le moyen d'acquisition 9 d'image peut comprendre un fond de contraste 22 disposé en arrière plan de la zone de contact/champ de vision 10. Le moyen d'acquisition est avantageusement complété par un moyen d'éclairage 21 spécifique de la zone de contact 10.

De plus, le banc de caractérisation peut être capable de fonctionner dans une plage de températures comprise entre -40°C et +85°C et qui correspond à l'utilisation de capteurs sur un véhicule.

Enfin, le banc peut être appliqué à tout ouvrant entraîné relativement à un dormant, avec expérimentation en laboratoire et/ou dans son environnement propre, notamment sur le véhicule à tester.

## Revendications

1. Banc de caractérisation d'écrasement d'un capteur (1) de pincement pour ouvrant motorisé notamment de véhicule automobile, équipé d'un module de détection (2) d'un choc/écrasement du capteur (1) apte à produire un signal logique (3) lorsque le capteur (1) subit un choc/écrasement,
**caractérisé en ce qu'**il comprend :
- un cadre d'accueil (4) à la périphérie duquel est disposé le capteur (1) de pincement à caractériser, selon une forme indicative de l'utilisation finale, et
- un impacteur (8),
mobiles relativement l'un par rapport à l'autre, afin que l'impacteur (8) puisse venir en contact avec ledit capteur (1) selon un mouvement indicatif du mouvement de fermeture dudit ouvrant motorisé,
- une motorisation (7) assurant ce mouvement,
- un moyen de commande (6) de la motorisation (7),
- un moyen d'acquisition (9) d'image, cadré sur la zone de contact (10) entre l'impacteur (8) et le capteur (1), apte à observer l'écrasement (11) dudit capteur (1),
- un moyen d'analyse (12) d'image apte à traiter les images acquises pour mesurer la course d'écrasement (11) du capteur (1),
- un module de traitement (13) interfaçant le moyen d'analyse (12) d'image et le module de détection (2) d'un choc/écrasement afin de corréler temporellement le signal logique (3) de détection d'un choc/écrasement du capteur (1) avec la course d'écrasement (11) du capteur (1).

2. Banc de caractérisation selon la revendication 1, où le module de traitement (13) interface le moyen de commande (6) de la motorisation (7) afin de commander la motorisation (7).

3. Banc de caractérisation selon la revendication 1 ou 2, comprenant encore un moyen de mesure (14) d'effort disposé de manière à mesurer l'effort d'écrasement (15) du capteur (1), le module de traitement (13) interfaçant ledit moyen de mesure (14) d'effort afin de corréler l'effort d'écrasement (15) avec la course d'écrasement (11) du capteur (1).

4. Banc de caractérisation selon la revendication 3, où la courbe de l'effort d'écrasement (15) en fonction de la course d'écrasement (11) est tabulée.

5. Banc de caractérisation selon l'une quelconque des revendications précédentes, comprenant encore un module de sécurité (16) apte à stopper/inverser la commande de motorisation (7), ledit module de sécurité (16) étant interfacé avec le module de détection (2) d'un choc/écrasement et avec le moyen de commande (6) de la motorisation (7), afin de stopper/inverser la motorisation (7) sur réception du signal logique (3) de détection d'un choc/écrasement du capteur (1).

6. Banc de caractérisation selon l'une quelconque des revendications précédentes, où le module de traitement (13) est apte à déterminer la course d'écrasement (11) et l'effort d'écrasement (15) à l'instant de réception du signal logique (3) de détection d'un choc/écrasement du capteur (1).

7. Banc de caractérisation selon l'une quelconque des revendications précédentes, comprenant encore un moyen de détection (17) associé à la motorisation (7), apte à déterminer l'arrét/l'inversion de la motorisation (7).

8. Banc de caractérisation selon l'une quelconque des revendications précédentes, où le module de traitement (13) est apte à déterminer la course d'écrasement (11) et l'effort d'écrasement (15) à l'instant de l'arrêt/l'inversion de la motorisation (7).

9. Banc de caractérisation selon l'une quelconque des revendications précédentes, comprenant encore un moyen de calcul (18) de maximum, apte à déterminer la course d'écrasement maximale, ou l'effort d'écrasement maximum.

10. Banc de caractérisation selon l'une quelconque des revendications précédentes, comprenant encore un moyen de mesure (19) du temps afin de pouvoir dater : l'instant d'accostage de l'impacteur (8) avec le capteur (1), l'instant d'émission par le module de détection (2) du signal logique (3) de détection d'un choc/écrasement, l'instant d'émission par le module de sécurité (16) d'une commande d'arrêt/inversion (20) de la commande (6) de motorisation (7), l'instant d'arrêt/inversion effectif de la motorisation (7) tel que détecté par le moyen de détection (17) associé à la motorisation (7), l'instant où se produit le maximum de l'écrasement, et/ou l'instant où se produit le maximum de l'effort.

11. Banc de caractérisation selon l'une quelconque des revendications précédentes, où le moyen d'acquisition (9) d'image est soit fixe par rapport au capteur (1), soit fixe par rapport à l'impacteur (8).

12. Banc de caractérisation selon l'une quelconque des revendications précédentes, où le moyen d'acquisition (9) d'image est une caméra à cadence au moins égale à 1000 images/s pour une vitesse de mouvement de l'impacteur (8) de 0,1m/s.

13. Banc de caractérisation selon l'une quelconque des revendications précédentes, où le moyen d'acquisition (9) d'image comprend encore un moyen d'éclairage (21) spécifique de la zone de contact (10) et un fond de contraste (22) disposé en arrière plan de la zone de contact (10).

14. Banc de caractérisation selon l'une quelconque des revendications précédentes, où le moyen d'acquisition (9) d'image est apte à mesurer une course d'écrasement (11) avec une résolution de 5 centièmes, soit un champ (10) de 100 pixels pour 5 mm.

## Patentansprüche

1. Bank zur Charakterisierung des Quetschens eines Klemmsensors (1) für ein motorisiertes Öffnungselement, insbesondere eines Automobils, das mit einem Modul (2) zum Erfassen eines Stoßes / Quetschens des Sensors (1) versehen ist, das geeignet ist, ein Logiksignal (3) zu erzeugen, wenn der Sensor (1) einen Stoß / ein Quetschen erleidet, **dadurch gekennzeichnet, dass** sie enthält:
- einen Aufnahmerahmen (4), an dessen Rand der zu charakterisierende Klemmsensor (1) in einer Form angeordnet ist, die indikativ für die endgültige Verwendung ist, und
- einen Anschlag (8),
die relativ zueinander beweglich sind, so dass der Anschlag (8) in Kontakt mit dem Sensor (1) kommen kann bei einer Bewegung, die indikativ für die Schließbewegung des motorisiertes Öffnungselement ist,
- eine Motorisierung (7), die diese Bewegung sicherstellt,
- ein Steuermittel (6) der Motorisierung (7),
- ein Bilderfassungsmittel (9), das auf die Kontaktzone (10) zwischen dem Anschlag (8) und dem Sensor (1) ausgerichtet und geeignet ist, das Quetschen (11) des Sensors (1) zu beobachten,
- ein Bildanalysemittel (12), das geeignet ist, die aufgenommenen Bilder zu bearbeiten zum Messen des Wegs des Quetschens (11) des Sensors (1),
- ein Verarbeitungsmodul (13), das eine Schnittstelle aufweist zu dem Bildanalysemittel (12) und dem Modul (2) zum Erfassen eines Stoßes / Quetschens zum zeitlichen Korrelieren des Logiksignals (3) des Erfassens eines Stoßes / Quetschens des Sensors (1) mit dem Weg des Quetschens (11) des Sensors (1).

2. Charakterisierungsbank gemäß Anspruch 1, bei der das Verarbeitungsmodul (13) eine Schnittstelle aufweist zu dem Steuermittel (6) der Motorisierung (7), um die Motorisierung (7) zu steuern.

3. Charakterisierungsbank gemäß Anspruch 1 oder 2, die weiter ein Kraftmessmittel (14) enthält, das so angeordnet ist, dass es die Quetschkraft (15) des Sensors (1) misst,
wobei das Verarbeitungsmodul (13) eine Schnittstelle aufweist zu dem Kraftmessmittel (14) zum zeitlichen Korrelieren der Quetschkraft (15) mit dem Weg des Quetschens (11) des Sensors (1).

4. Charakterisierungsbank gemäß Anspruch 3, bei der die Kurve der Quetschkraft (15) als Funktion des Wegs des Quetschens (11) tabelliert ist.

5. Charakterisierungsbank gemäß einem der vorigen Ansprüche, die weiter ein Sicherheitsmodul (16) enthält, das geeignet ist, die Steuerung der Motorisierung (7) anzuhalten / umzukehren,
wobei das Sicherheitsmodul (16) eine Schnittstelle aufweist zu dem Modul (2) zum Erfassen eines Stoßes / Quetschens und zu dem Steuermittel (6) der Motorisierung (7), um die Motorisierung (7) anzuhalten / umzukehren bei Empfang des Logiksignals (3) des Erfassens eines Stoßes / Quetschens des Sensors (1).

6. Charakterisierungsbank gemäß einem der vorigen Ansprüche, bei der das Verarbeitungsmodul (13) geeignet ist, den Weg des Quetschens (11) und die Quetschkraft (15) in dem Moment des Empfangs des Logiksignals (3) des Erfassens eines Stoßes / Quetschens des Sensors (1) zu bestimmen.

7. Charakterisierungsbank gemäß einem der vorigen Ansprüche, die weiter ein Erfassungsmittel (17) enthält, das der Motorisierung (7) zugeordnet und geeignet ist, das Anhalten / Umkehren der Motorisierung (7) zu bestimmen.

8. Charakterisierungsbank gemäß einem der vorigen Ansprüche, bei der das Verarbeitungsmodul (13) geeignet ist, den Weg des Quetschens (11) und die Quetschkraft (15) in dem Moment des Anhaltens / Umkehrens der Motorisierung (7) zu bestimmen.

9. Charakterisierungsbank gemäß einem der vorigen Ansprüche, die weiter ein Maximumberechnungsmittel (18) enthält, das geeignet ist, den maximalen Weg des Quetschens oder die maximale Quetschkraft zu bestimmen.

10. Charakterisierungsbank gemäß einem der vorigen Ansprüche, die weiter ein Zeitmessmittel (19) enthält, um zeitlich festlegen zu können:
den Moment des Anlegens des Anschlags (8) an dem Sensor (1),
den Moment des Ausgebens des Logiksignals (3) des Erfassens eines Stoßes / Quetschens durch das Erfassungsmodul (2),
den Moment des Ausgebens eines Befehls zum Anhalten / Umkehren (20) der Steuerung (6) der Motorisierung (7) durch das Sicherheitsmodul (16),
den Moment des tatsächlichen Anhaltens / Umkehrens der Motorisierung (7), wie er durch das Erfassungsmittel (17) erfasst wird, das das der Motorisierung (7) zugeordnet ist,
den Moment, in dem das Maximum der Quetschung auftritt, und / oder
den Moment, in dem das Maximum der Kraft auftritt.

11. Charakterisierungsbank gemäß einem der vorigen Ansprüche, bei der das Bilderfassungsmittel (9) entweder fest relativ zu dem Sensor (1) oder fest relativ zu dem Anschlag (8) ist.

12. Charakterisierungsbank gemäß einem der vorigen Ansprüche, bei der das Bilderfassungsmittel (9) eine Kamera mit einer Taktrate von größer gleich 1000 Bilder / s für eine Geschwindigkeit der Bewegung des Anschlags (8) von 0,1 m/s ist.

13. Charakterisierungsbank gemäß einem der vorigen Ansprüche, bei der das Bilderfassungsmittel (9) weiter enthält:
ein spezifisches Beleuchtungsmittel (21) für die Kontaktzone (10) und
einen Kontrasthintergrund (22), der hinter einer Ebene der Kontaktzone (10) angeordnet ist.

14. Charakterisierungsbank gemäß einem der vorigen Ansprüche, bei der das Bilderfassungsmittel (9) geeignet ist, einen Weg des Quetschens (11) mit einer Auflösung von 5 Hundertsteln zu messen, also ein Feld (10) von 100 Pixeln für 5 mm.

## Claims

1. Bench for characterizing the crush of a pinching sensor (1) for a power door leaf, notably of an automobile, equipped with a module (2) for detecting an impact/crushing of the sensor (1) suitable for producing a logic signal (3) when the sensor (1) undergoes an impact/crushing,
**characterized in that** it comprises:
- an accommodating frame (4) on the periphery of which is positioned the pinching sensor (1) to be characterized, according to a form indicative of the final use, and
- an impactor (8),
which are mobile relative to one another, in order for the impactor (8) to be able to come into contact with said sensor (1) by a movement indicative of the closure movement of said power door leaf,
- a motorization (7) ensuring this movement,
- a control means (6) for the motorization (7),
- an image acquisition means (9), framed on the contact zone (10) between the impactor (8) and the sensor (1), suitable for observing the crushing (11) of said sensor (1),
- an image analysis means (12) suitable for processing the images acquired to measure the crushing travel (11) of the sensor (1),
- a processing module (13) interfacing the image analysis means (12) and the module (2) for detecting an impact/crushing in order to temporally correlate the logic signal (3) of detection of an impact/crushing of the sensor (1) with the crushing travel (11) of the sensor (1).

2. Characterization bench according to Claim 1, in which the processing module (13) interfaces the control means (6) for the motorization (7) in order to control the motorization (7).

3. Characterization bench according to Claim 1 or 2, also comprising a force measurement means (14) arranged in such a way as to measure the crushing force (15) of the sensor (1), the processing module (13) interfacing said force measurement means (14) in order to correlate the crushing force (15) with the crushing travel (11) of the sensor (1).

4. Characterization bench according to Claim 3, in which the curve of the crushing force (15) as a function of the crushing travel (11) is tabulated.

5. Characterization bench according to any one of the preceding claims, also comprising a safety module (16) suitable for stopping/reversing the motorization control (7), said safety module (16) being interfaced with the module (2) for detecting an impact/crushing and with the control means (6) for the motorization (7), in order to stop/reverse the motorization (7) on reception of the logic signal (3) of detection of an impact/crushing of the sensor (1).

6. Characterization bench according to any one of the preceding claims, in which the processing module (13) is suitable for determining the crushing travel (11) and the crushing force (15) at the time of reception of the logic signal (3) of detection of an impact/crushing of the sensor (1).

7. Characterization bench according to any one of the preceding claims, also comprising a detection means (17) associated with the motorization (7), suitable for determining the stopping/reversal of the motorization (7).

8. Characterization bench according to any one of the preceding claims, in which the processing module (13) is suitable for determining the crushing travel (11) and the crushing force (15) at the time of the stopping/reversal of the motorization (7).

9. Characterization bench according to any one of the preceding claims, also comprising a maximum computation means (18), suitable for determining the maximum crushing travel, or the maximum crushing force.

10. Characterization bench according to any one of the preceding claims, also comprising a time measurement means (19) in order to be able to time-stamp: the instant of docking of the impactor (8) with the sensor (1), the instant of emission by the detection module (2) of the logic signal (3) of detection of an impact/crushing, the instant of emission by the safety module (16) of a command to stop/reverse (20) the control (6) of motorization (7), the instant of the actual stopping/reversal of the motorization (7) as detected by the detection means (17) associated with the motorization (7), the instant at which the maximum crushing occurs, and/or the instant at which the maximum force occurs.

11. Characterization bench according to any one of the preceding claims, in which the image acquisition means (9) is either fixed relative to the sensor (1), or fixed relative to the impactor (8).

12. Characterization bench according to any one of the preceding claims, in which the image acquisition means (9) is a camera with a rate at least equal to 1000 0 images/s for a speed of movement of the impactor (8) of 0.1 m/s.

13. Characterization bench according to any one of the preceding claims, in which the image acquisition means (9) also comprises a specific lighting means (21) for the contact zone (10) and a contrast backing (22) arranged in the background of the contact zone (10).

14. Characterization bench according to any one of the preceding claims, in which the image acquisition means (9) is suitable for measuring a crushing travel (11) with a resolution of five hundredths, i.e. a field (10) of 100 pixels for 5 mm.
